# EUROPÄISCHE PATENTANMELDUNG

(11) **EP 1 770 215 A1**
(43) Veröffentlichungstag der Anmeldung: **04.04.2007**
(21) Anmeldenummer: 05021233.1
(22) Anmeldetag: 29.09.2005
(51) Int. Cl.: D21H 27/10

(54) **Verpackungsmaterial mit Barriereschicht**

(71) Anmelder: Mondi Packaging AG, 1032 Wien (AT)
(72) Erfinder: Lippert, Erik, A-1120 Wien (AT); Hochleitner, Gisela, A-3363 Neufurth (AT)
(74) Vertreter: Landgraf, Elvira

(57) **Zusammenfassung**

Die Erfindung betrifft ein Verpackungsmaterial für feste oder flüssige Güter, bestehend aus Papier, Pappe, Karton, Geweben, Vliesen, aus holzartigen Materialien, natürücher Cellulose oder Kunststoff oder deren Verbunde, wobei das Verpackungsmaterial eine feuchtigkeits- und/oder fett-beständige Veredelungsschicht aus einem wiederaufschlämmbaren Polymer aufweist.

## Beschreibung

Die Erfindung betrifft veredeltes Papier, Pappe, Karton, Gewebe oder Vliese, aus holzartigen Materialien, natürlicher Cellulose oder Kunststoff oder deren Verbunde etc., die als Verpackungsmaterialien verwendet werden und eine Veredelungsschicht aufweisen.

Zur Verpackung, beispielsweise von Papier werden im Wesentlichen Verbunde von Papier mit Kunststoffen, die durch Co-extrudieren oder Laminierverfahren hergestellt werden, verwendet.
Dabei werden beispielsweise Polyethylen- oder Polyesterfolien mit dem Papier verbunden.

Aus der EP 656 442 B1 ist ein Verpackungsmaterial umfassend ein gewelltes nassfestes Papier, das zumindest teilweise mit einem Kautschuk-Klebestoff beschichtet ist, bekannt. Der Klebstoff ist so an dem nassfesten Papier befestigt, dass er beim Wiederaufschlämmen an Partikeln haften bleibt, die sich aus dem nassfesten Papier in dem wiederaufgeschlämmtem Gemisch gebildet haben, wobei diese Partikel größer sind als die recyclierbaren Fasern und von diesen trennbar sind.

Gegenstand der Erfindung ist ein Verpackungsmaterial für feste oder flüssige Güter, bestehend aus Papier, Pappe, Karton, Geweben, Vliesen, aus holzartigen Materialien, natürlicher Cellulose oder Kunststoff oder deren Verbunde, dadurch gekennzeichnet, dass das Verpackungsmaterial eine feuchtigkeits- und/oder fett-beständige Veredelungsschicht aus einem wiederaufschlämmbaren Polymeren aufweist.

Die Veredelungsschicht weist außerdem Barriereeigenschaften auf.
Barriereeigenschaften von Verpackungen werden gegenüber verschiedensten Stoffen erwünscht, z.B. Wasser und Wasserdampf, Sauerstoff, Fett und auch gegen viele Aromastoffe.

Als Basismaterial für das erfindungsgemäße Verpackungsmaterial kann beliebiges Papier, Pappe, beliebige Gewebe und Vliese aus natürlicher Cellulose, holzartigen Materialien oder Kunststoff mit einem Flächengewicht von 15 g/m³ bis 15 kg/m² verwendet werden.

Auf dieses Basismaterial wird mittels eines Veredelungsverfahrens die Beschichtung aus einem Polymeren aufgebracht.
Als Beschichtung wird dabei vorzugsweise eine Dispersion des entsprechenden Polymers verwendet. Als Dispersionsmittel kommen vorzugsweise Wasser, aber auch geeignete organische Lösungsmittel in Frage.

Als Polymere kommen beispielsweise Polymere und Copolymere von Styrol, Butadien, Isopren, Alkylacrylaten, Alkylmethacrylaten und Ethylen in Frage.

Besonders bevorzugt werden wässrige Dispersionen oder Suspensionen von modifizierten Styrol-Butadien-Copolymeren eingesetzt.
Diese Polymere weisen ausgezeichnete Barriereeigenschaften gegen Wasser, Wasserdampf und Aromastoffe, wie beispielsweise Ester, Fette und Öle, sowie Chemikalien auf.

Üblicherweise weist die Beschichtung nach dem Aufbringen auf das Papier ein Flächengewicht von 1 bis 30 g/m² auf, vorzugsweise 3 bis 25 g/m².

Die Auftragsmenge ist abhängig von der Textur des Basismaterials, den gewünschten Barriereeigenschaften und der Zusammensetzung der Beschichtung.

Gegebenenfalls kann vor der Aufbringung der polymeren Beschichtung ein Haftvermittler auf das Papier aufgebracht werden. Die ist insbesondere dann vorteilhaft, wenn das Basismaterial eine offene Textur aufweist oder wenn als Basismaterial beispielsweise gestrichenes Papier verwendet wird, wobei der Strich nicht kompatible mit der Veredelungsschicht ist.

Als Haftvermittler kommen handelsübliche Haftvermittler, beispielsweise ionogene oder nicht ionogene, gegebenenfalls chemisch modifzierte Haftvermittler , beispielsweise auch isocyanatvernetzende Primer in Frage.
Der Haftvermittler kann gegebenenfalls auch Füllstoffe, beispielsweise mineralische oder nicht mineralische Füllstoffe, natürlichen oder künstlichen Ursprungs, beispielsweise TiO2, Al203 und dergleichen enthalten.

Üblicherweise wird der Haftvermittler mit einem Flächengewicht von 0,1 - 30 g/m² aufgebracht.

Gegebenenfalls kann das Papier bzw. das mit dem Haftvermittler beschichtete Papier vor der Bedruckung mit der wässrigen Dispersion des Polymers mit einer konventionellen Druckfarbe zur Aufbringung von Informationen bedruckt werden.

Als Druckverfahren zur Aufbringung des Haftvermittlers bzw. der Polymerdispersion kommen alle üblichen Beschichtungs- und Druckverfahrenverfahren, wie Tiefdruck, Flexodruck, Siebdruck, Offsetdruck, Digitaldruck, Curtain-Coating, Besprühungen, Walzenauftragsverfahren und dergleichen in Frage.

Gegebenenfalls kann das mit der erfindungsgemäßen Polymerbeschichtung versehene Basismaterial vor der Bedruckung auch zu Verbesserung der Haftung und Stabilität der Bedruckung mittels eines geeigneten Verfahrens, beispielsweise einer Corona- oder Flammbehandlung vorbehandelt werden.

Es können auch Vorder- und Rückseite des zumindest einseitig mit der Veredlungsschicht versehenen Basismaterials über Wendestation bedruckt werden. Es können in üblicher Weise auch mehrere Druck- und/oder Farbschichten aufgebracht werden.
Ferner ist es möglich auch Lacke, beispielsweise strahlungshärtbare Lacke, z.B. UV-härtbare Lacksysteme in einem Druck- oder Beschichtungsverfahren aufzubringen.
Dabei können in den strahlungshärtbaren Lack in einem weiteren Verfahrensschritt auch Strukturen eingebracht werden, beispielsweise durch Prägen und dergleichen.
Als Druck- bzw. Beschichtungsverfahren kommen dabei alle üblichen bekannten, bereits oben erwähnten Verfahren in Frage.

Die Aufbringung der Veredelungsschicht kann in-line, beispielsweise nach Herstellung des Basismaterials in einer Papiermaschine oder nach Herstellung eines Verbundes, beispielsweise in einer Extrusionsmaschine, oder in einem getrennten Arbeitsgang erfolgen.

Das auf diese Weise bedruckte Papier weist eine ausgezeichnete Beständigkeit gegen Wasser, Wasserdampf, Fette, Öle und Chemikalien auf.

Ferner kann das erfindungsgemäße Verpackungsmaterial zur Gänze wiederaufschlämmbar sein und kann daher direkt dem Altpapierwiederverwertungskreislauf zugeführt werden.
Eine Trennung der Bestandteile des Verpackungsmaterials ist nicht erforderlich.

Das Verpackungsmaterial kann als Verpackung von festen oder flüssigen Schüttgütern, für blattförmige, stückige, pulverförmige, pastöse, gelartige oder flüssige Konsumgüterverpackungen verwendet werden.

Sofern die Chemikalien eine entsprechende Unbedenklichkeitsbescheinigung verliehen bekommen hat, kann das Verpackungsmaterial beispielsweise zur Verpackung von Lebensmittel, Tierfutter, Kosmetika, Pharmazeutika, Agrarprodukten, Agrarchemikalien, Düngemitteln und dergleichen verwendet werden, auch wenn ein direkter Kontakt zum Füllgut besteht.

Ferner kann das Verpackungsmaterial für die Herstellung von Folien, Säcken, Taschen, Beuteln, Faltschachteln, Papierverpackungen, Spiralwickelverpackungen, Hülsen, Schläuchen, Wellpappeverpackungen, flexibel, starr oder halbstarr sein können verwendet werden.

Ferner kann das Verpackungsmaterial für technische Verbunde verwendet werden.

### Beispiel 1:

Auf einer Flexodruckmaschine wurde auf das Basispapier mit einem Flächengewicht von 100 g/m² folgende Schichten aufgebracht:
Haftvermittler
   1. Farbdruck
   2. Farbdruck
Trockenen bei 120°C
Polymerdispersion
Trockenen bei 120°C
Die Produktionsgeschwindigkeit betrug 110m/min

Die Wasserdampfdurchlässigkeit wurde bei 23°C und 75% relativer Feuchtigkeit ermittelt.

| Material | Flächengewicht | Flächengewicht der Beschichtung, trocken | WVTR [g/m²d] |
|---|---|---|---|
| | [g/m²] | [g/m²] | |
| | | | |
| PC + TC | 107,8 | 9,8 | 11,00 |
| base | 100 | - | - |
| control | - | - | 6,41 |

| | | | |
|---|---|---|---|
| WVTR ... Wasserdampfdurchlässigkeit bei 23 °C, 75 % relativer Feuchtigkeit. control ... Polyethylenbeschichtetes Papier, 12 g/m² PE PC ... Haftvermittler TC ... Polymerbeschichtung: wässrige Dispersion eines modifizierten Styrolbutadiencopolymeren | | | |

## Patentansprüche

1. Verpackungsmaterial für feste oder flüssige Güter, bestehend aus Papier, Pappe, Karton, Geweben, Vliesen, aus holzartigen Materialien, natürlicher Cellulose oder Kunststoff oder deren Verbunde, **dadurch gekennzeichnet, dass** das Verpackungsmaterial eine feuchtigkeits- und /oderfett-beständige Veredelungsschicht aus einem wiederaufschlämmbaren Polymeren aufweist.

2. Verpackungsmaterial nach Anspruch 1, **dadurch gekennzeichnet, dass** das wiederaufschlämmbare Polymer ausgewählt ist aus der Gruppe der Polymere und Copolymere von Styrol, Butadien, Isopren, Alkylacrylaten, Alkylmethacrylaten und Ethylen.

3. Verpackungsmaterial nach Anspruch 2, **dadurch gekennzeichnet, dass** das wiederaufschlämmbare Polymer ein modifziertes Styrol-Butadien-Copolymer ist.

4. Verpackungsmaterial nach einem der Ansprüche 1 bis 3, **dadurch gekennzeichnet, dass** zwischen Papier und Polymerbeschichtung ein Haftvermittler aufgebracht ist.

5. Verpackungsmaterial nach einem der Ansprüche 1 bis 4, **dadurch gekennzeichnet, dass** gegebenenfalls beispielsweise auch mineralische oder nicht mineralische Füllstoffe, natürlichen oder künstlichen Ursprungs enthalten sind.

6. Verpackungsmaterial nach einem der Ansprüche 1 bis 4, **dadurch gekennzeichnet, dass** das Papier bzw. die Haftvermittlerschicht mit einer oder mehreren Farben bedruckt ist.

7. Verpackungsmaterial nach einem der Ansprüche 1 bis 5, **dadurch gekennzeichnet, dass** das die Beschichtung aus dem wiederaufschlämmbaren Polymeren ein Flächengewicht von 1 bis 30 g/m² aufweist.

8. Verpackungsmaterial nach einem der Ansprüche 4 bis 6, **dadurch gekennzeichnet, dass** die Haftvermittlerschicht ein Flächengewicht von 0,1 bis 30 g/m² aufweist.

9. Verfahren zur Herstellung eines Verpackungsmaterials, **dadurch gekennzeichnet, dass** die polymere Beschichtung inline nach Herstellung des Basismaterial oder in einem getrennten Verfahrensschritt erfolgt.

10. Verwendung des Verpackungsmaterials für feste oder flüssige Schüttgüter, blattförmige, stückige, pulverförmige, pastöse, gelartige oder flüssige Konsumgüter.

11. Verwendung des Verpackungsmaterials zur Herstellung von Folien, Säcken, Taschen, Beuteln, Faltschachteln, Papierverpackungen, Spiralwickelverpackungen, Hülsen, Schläuchen, Wellpappeverpackungen, flexibel, starr oder halbstarr sein können.

12. Verwendung des Verpackungsmaterials als technischer Verbunde.
